Europäisches Patentamt

European Patent Office

Office européen des brevets

(11) Veröffentlichungsnummer: **0 060 473**
**A1**

(12) # EUROPÄISCHE PATENTANMELDUNG

(21) Anmeldenummer: **82101796.9**

(22) Anmeldetag: **08.03.82**

(51) Int. Cl.³: **B 65 D 77/20,** B 65 D 25/14,
B 32 B 15/08

(30) Priorität: **17.03.81 CH 1804/81**

(43) Veröffentlichungstag der Anmeldung: **22.09.82**
**Patentblatt 82/38**

(84) Benannte Vertragsstaaten: **AT BE DE FR GB IT LU NL**
**SE**

(71) Anmelder: **Aluminiumwerke A.-G. Rorschach,**
**Industriestrasse 35, CH-9400 Rorschach (CH)**

(72) Erfinder: **Braun, Johannes, Ringstrasse,**
**CH-9325 Roggwil (CH)**
Erfinder: **Sturm, Winfried, Dr., Ahornstrasse 4,**
**CH-9403 Goldach (CH)**

(74) Vertreter: **Blum, Rudolf E. et al, c/o E. Blum & Co**
**Patentanwälte Vorderberg 11, CH-8044 Zürich (CH)**

(54) Konservendose mit Dosenkörper aus Weissblech.

(57) Der Dosenkörper (1) weist eine Innenschicht (2) aus einem sterilisierbeständigen Thermoplast auf. Der Deckel weist eine Aluminiummembrane (3) auf. Die gegen den Doseninhalt hin gelegene Oberfläche der Aluminiummembrane (3) ist von einem Thermoplast (4) beschichtet. Die Außenseite der Aluminiummembrane (3) weist einen sie verstärkenden Überzug (5) aus Kunststoff auf. Weiter weist der Deckel eine Aufreißlasche (6) auf. Der Deckel ist mit dem Dosenkörper verschweißt und kann von diesem abgerissen werden. Damit benötigt man keinen Büchsenöffner mehr.

0060473

- 1 -

Konservendose mit Dosenkörper aus Weissblech

------------------------------------------------

Die Erfindung betrifft eine Konservendose mit einem Dosenkörper aus innen sterilisierfest kunststoffbeschichtetem Weissblech und einem mit dem Dosenkörper verbundenen Deckel.

Gemäss dem Stand der Technik ausgebildete Konservendosen weisen einen Dosenkörper aus Weissblech auf. Dieser Dosenkörper ist innen von einer Kunststoffschicht, üblicherweise einem Duroplast beschichtet. Der Deckel der Konservendose ist ebenfalls aus einem innen kunststoffbeschichteten Weissblech gebildet. Dieser Deckel ist mechanisch mittels einer Falzung mit dem Dosenkörper verbunden. Zum Oeffnen der Konservendosen benötigt man bekanntlicherweise ein Werkzeug, einen Dosenöffner der handbetätigt oder motorgetrieben ist, und der zum Oeffnen der Konservendose das Weissblech an einer Stelle schneidet und somit durchtrennt.

Folglich kann eine Konservendose nur mittels eines zu diesem Zweck besonders ausgebildeten Werkzeuges geöffnet werden, wobei solche Werkzeuge oft derart vereinfacht ausgebildet sind, dass das Oeffnen eine schwierige und unbequeme Arbeit ist. Weiter entstehen bei dem Oeffnen der Konservendose beim Weissblech scharfe Kanten, die eine erhebliche Verletzungsgefahr darstellen.

Hier will die Erfindung Abhilfe schaffen. Die Erfindung, wie sie in den Ansprüchen gekennzeichnet ist,

0060473

löst die Aufgabe, einen Dosenkörper aus innen sterilisierfest kunststoffbeschichtetem Weissblech und einem mit dem
Dosenkörper verbundenen Deckel zu schaffen, bei dem der
Deckel mit dem Dosenkörper durch den Einsatz eines Thermoplasts verschweisst ist.

Die durch die Erfindung erreichten Vorteile sind im
wesentlichen darin zu sehen, dass zum Oeffnen der Konservendose keine Werkzeuge notwendig sind und die geöffnete
Dose keine scharfkantigen, verletzungsgefährliche Ränder
aufweist.

Im folgenden wird die Erfindung anhand von mehreren
Ausführungswegen darstellenden Zeichnungen näher erläutert.

Es zeigt:

Fig. 1 einen Schnitt durch eine erste Ausführung
der erfindungsgemässen Konservendose,

Fig. 2 eine Aufsicht auf die Konservendose der Fig.1,

Fig. 3 einen Schnitt durch eine zweite Ausführung
der erfindungsgemässen Konservendose, und

Fig. 4 eine Aufsicht auf die Konservendose der Fig.3.

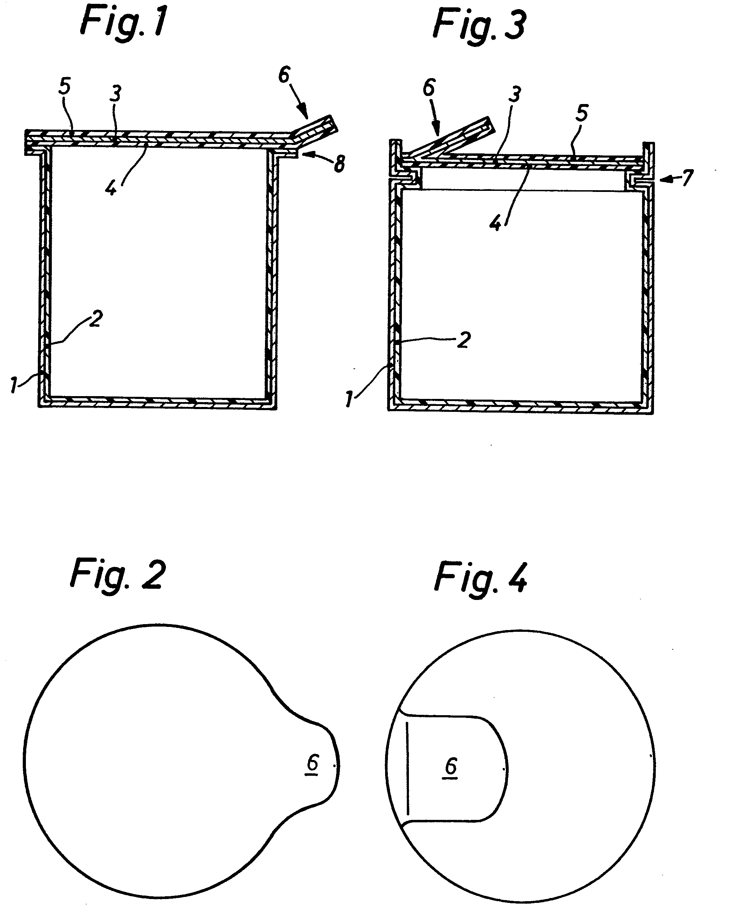

In der Fig. 1 ist eine Konservendose gezeigt, die
einen Dosenkörper 1 aufweist, der in bekannter Weise aus
Weissblech hergestellt ist. Um irgendwelche schädliche
Wechselwirkungen zwischen dem Inhalt der Konservendose und
dem Dosenkörper 1 zu vermeiden, ist auf der Innenseite des
Dosenkörpers 1 eine Kunststoffschicht 2 aufgebracht. Die
Kunststoffschicht enthält einen Thermoplast in Form einer
Lackierung. Dazu bieten sich verschiedene Kunststoffe an.
Die Kunststoffschicht 2 kann ein Polypropylen- und Epoxyharz enthalten. Das Epoxyharz kann mit einem Phenol- und/
oder Aminharz vernetzt sein. Weiter kann die Kunststoffschicht 2 ein gesättigtes Polyesterharz, Polyurethan, Polyamid oder Epoxyharz enthalten.

Der Deckel der Konservendose ist von einer Aluminiummembrane 3, also einem äusserst dünnen Aluminiumkörper
gebildet. Die gegen den Inhalt des Dosenkörpers 1 hin gelegene Oberfläche der Aluminiummembrane 3 weist ebenfalls eine Kunststoffschicht 4 auf. Diese Kunststoffschicht 4 kann ein Acrylsäure-modifiziertes Polypropylen, Polyesterharz, Polyurethan, Polyamid oder Epoxyharz enthalten. Auch kann die Kunststoffschicht 4 aus einem biaxial orientierten Polypropylen (OPP) oder einem biaxial orientierten Polyamidfilm (OPA) bestehen.

Zur Verstärkung der Aluminiummembrane 3 ist bei der gezeigten Ausführung auf ihrer Aussenseite eine weitere Kunststoffschicht 5 aufgebracht. Diese Kunststoffschicht 5 kann ein biaxial orientiertes Polypropylen (OPP), ein Polyethylenterephthalat (PETP) oder ein biaxial orientiertes Polyamid (OPA) sein.

Alle diese Thermoplaste sind sterilisierfest. Das Verbinden des Deckels mit der Konservendose erfolgt den vorhandenen Werkstoffen entsprechend mittels eines Wärmekontaktverfahrens oder mittels Ultraschall in einer bekannten Weise.

Der Deckel der Konservendose, bestehens aus der Aluminiummembrane 3, der inneren Kunststoffschicht 4 und der äusseren Kunststoffschicht 5, weist einen Aufreisslappen bzw. Wegreisslappen 6 auf. Damit lässt sich der Deckel mittels einer einfachen Handhabung vom Dosenkörper 1 entfernen, ohne dass irgendwelche der bekannten Dosenöffner verwendet werden müssen. Auch bleiben keine scharfkantigen, verletzungsgefährlichen Ränder im Blech zurück.

In den Fig. 3 und 4 ist eine weitere Ausführung dargestellt. Die dabei verwendeten Stoffe sind dieselben der Ausführung nach den Fig. 1 und 2. Jedoch ist bei der Ausführung nach den Fig. 3 und 4 der Deckel, enthaltend die Aluminiummembrane 3, die Innenschicht 4, die Aussenschicht 5 sowie den Aufreisslappen 6, im Dosenkörper 1 versenkt angeordnet. Zu diesem Zweck ist im Mantel des Dosenkörpers 1 durch eine Falzung 7 eine nach innen ragende Rippe gebildet, auf welche der Aluminiummembrane 3 mit der inneren Kunststoffschicht 4 aufliegt und damit verschweisst ist. Diese Ausführung bietet den Vorteil, dass der Deckel der Konservendose weniger Beschädigungen ausgesetzt ist, und bei einer entsprechenden Ausbildung des Bodens des Dosenkörpers 1 kann eine vorzügliche Stapelbarkeit solcher Konservendosen erzielt werden. Im Gegensatz zu der Ausführung nach den Fig. 1 und 2, gemäss welcher die Aufreisslasche 6 einstückig mit der Aluminiummembrane 3 verbunden ist, ist in der Ausführung nach den Fig. 3 und 4 die Aufreisslasche 6 mittels irgendwelchem bekannten Verfahren auf der Aluminiummembrane 3 aufgesetzt und damit verbunden.

0060473

Patentansprüche
--------------------------------

1. Konservendose mit einem Dosenkörper aus innen sterilisierfest kunststoffbeschichtetem Weissblech und einem mit dem Dosenkörper verbundenen Deckel, dadurch gekennzeichnet, dass die bei der Innenseite des Weissblechs gelegene Kunststoffschicht einen sterilisierfesten Thermoplast enthält, dass der Deckel eine innen mit einem sterilisierfesten Thermoplast beschichtete Aluminiummembrane ist, und dass die Aluminiummembrane mit dem Dosenkörper dicht verschweisst ist.

2. Konservendose nach Anspruch 1, dadurch gekennzeichnet, dass die Aluminiummembrane ein mit einer Aufreisslasche ausgebildeter Aufreissdeckel ist.

3. Konservendose nach Anspruch 1, dadurch gekennzeichnet, dass die Aluminiummembrane auf ihrer Aussenseite einen sie verstärkenden Belag aus Kunststoff aufweist.

4. Konservendose nach Anspruch 1, dadurch gekennzeichnet, dass die Kunststoffschicht auf der Innenseite des Weissbleches ein Polypropylen- und Epoxyharz enthält.

5. Konservendose nach Anspruch 4, dadurch gekennzeichnet, dass das Epoxyharz mit einem Phenol- und/oder Aminharz vernetzt ist.

6. Konservendose nach Anspruch 1, dadurch gekennzeichnet, dass die Kunststoffschicht auf der Innenseite des Weissbleches ein gesättigtes Polyesterharz, Polyurethan, Polyamid oder Epoxyharz enthält.

7. Konservendose nach Anspruch 1, dadurch gekennzeichnet, dass die Kunststoffschicht auf der Innenseite der Aluminiummembrane ein acrylsäuremodifiziertes Polypropylen, Polyesterharz, Polyurethan, Polyamid oder Epoxyharz enthält.

8. Konservendose nach Anspruch 1, dadurch gekennzeichnet, dass die Kunststoffschicht auf der Innenseite der Aluminiummembrane aus einem biaxial orientierten Polypropylenfilm oder einem biaxial orientierten Polyamidfilm besteht.

9. Konservendose nach Anspruch 3, dadurch gekennzeichnet, dass der Belag auf der Aussenseite der Aluminiummembrane aus einem Film aus einem biaxial orientierten Polypropylen, einem Polyethylenterephthalat oder einem biaxial orientierten Polyamid besteht.

0060473

1 / 1

Fig.1

Fig.3

Fig. 2

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 946 871 (W.G. STURM)<br><br>* Insgesamt *<br><br>--- | 1,2,4,7 | B 65 D 77/20<br>B 65 D 25/14<br>B 32 B 15/08 |
| A | DE-A-2 600 811 (FA. EPPCO)<br>* Anspruche 1,14; Seite 10; Seite 11, Zeilen 7-10; Seite 13, Zeilen 9-10, 14-24; Seite 14, Zeilen 1-5; Seite 15, Zeilen 10-14; Figuren 1,2 *<br><br>--- | 1,4,6 | |
| A | DE-A-1 922 678 (HUECK & BUREN FG)<br>* Insgesamt *<br><br>----- | 1-5,8 | |

**RECHERCHIERTE SACHGEBIETE (Int. Cl. ³)**

B 65 D

Der vorliegende Recherchenbericht wurde für alle Patentansprüche erstellt.

| Recherchenort DEN HAAG | Abschlußdatum der Recherche 18-06-1982 | Prüfer DE LA MORINERIE B.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82